# EUROPEAN PATENT APPLICATION

(11) **EP 2 338 580 A1**
(43) Date of publication of application: **29.06.2011**
(21) Application number: 09180768.5
(22) Date of filing: 24.12.2009
(51) Int. Cl.: B01D 19/00

(54) **A microfluidic device, a method of separating a multiphase fluid and a fluid conduit comprising a microfluidic device.**

(71) Applicant: Nederlandse Organisatie voor Toegepast -Natuurwetenschappelijk Onderzoek TNO, 2628 VK Delft (NL)
(72) Inventor: Lexmond, Axel Sebastiaan, 2253 AC Voorschoten (NL); Wennersbusch, Nadine M., 2628 VL DELFT (NL); Van Der Heiden, Maurits S., 2498 BW Den Haag (NL); Jansen, Rik, 2024 DX Haarlem (NL)
(74) Representative: Hatzmann, Martin

(57) **Abstract**

The invention relates to a microfluidic device comprising a fluidic cell (20) for accommodating a fluid comprising a liquid component and a gas component in use, the device comprising: an ultrasonic transducer (29) arranged in a direct vicinity of a wall of the fluidic cell (20) for generating an ultrasonic wave in an inner volume of the fluidic cell, wherein the ultrasonic transducer is adapted to operate with a frequency in the range of 0.04 - 10 MHz and to generate an ultrasonic field having a power gradient and/or a phase gradient. Preferably, the ultrasonic transducer is arranged to generate an ultrasonic beam in a first region (27) with high amplitude and in a second region (28) with low amplitude for achieving phase separation of a two-phase fluid provided in the fluidic cell (20). The invention further relates to a method of enabling a phase separation in a fluid, and a conduit comprising a microfluidic device.

## Description

### FIELD OF THE INVENTION

The invention relates to a microfluidic device for separating constituents of a multiphase fluid. The invention further relates to a method of separating a multiphase fluid and a fluid conduit comprising a microfluidic device.

### BACKGROUND OF THE INVENTION

An embodiment of a microfluidic device as is set forth in the opening paragraph is known from GB 2 452 407. Operation of the known microfluidic device is based on a principle that different fluids may have different wetting behavior on certain materials or microstructures. Accordingly, the known microfluidic device comprises a porous membrane for enabling separation of the constituents of the multiphase fluids. For example, in a two-phase fluid, pores of the membrane may be wetted by a first fluid while not being wetted by a second fluid. As a result, the first fluid may flow freely through the pores, while the second fluid will form a meniscus preventing it to entering the pores.

It is a disadvantage of the known microfluidic device that its operation efficiency may be dependent on impurities present in the multiphase fluid. For example, such impurities may relate to sediment which may cause stoppage of the pores. Alternatively, an impurity may interact with the pores altering the wetting behavior of the constituents of the multiphase fluid which may lead to malfunction of the device as a whole.

### SUMMARY OF THE INVENTION

It is an object of the invention to provide an improved microfluidic device, wherein such disadvantageous effects are substantially mitigated. For example, an improved microreactor or microseparator may be provided.

To this end the microfluidic device apparatus according to the invention comprises a fluidic cell for accommodating a fluid in use wherein the fluid comprises a gas component and a liquid component, the device further comprising:
- an ultrasonic transducer arranged in a direct vicinity of a wall of the fluidic cell for generating an ultrasonic wave in an inner volume of the fluidic for substantially separating the gas component from the fluid component, wherein the ultrasonic transducer is adapted to operate with a frequency in the range of 0.04 - 10 MHz, said ultrasonic wave having a power gradient and/or a phase gradient.

The technical feature of the invention is based on the insight that a liquid, for example, water or oil, may be attracted by a wall which is vibrating pursuant to application of high frequency ultrasonic field. The applied power may be in the range of 10 W/cm². It is found that the ultrasonic transducer operable with a frequency between 0.04 - 10 MHz causes suitable migration of the liquid resulting in it's accumulation in a region of high frequency ultrasonic field and/or in the region of where phase of the ultrasonic field reaches its maximum value. It will be appreciated that the liquid component will migrate towards a region of high power and in the direction of positive phase change. Particularly good results have been achieved when the ultrasonic transmitter was arranged to operate in the frequency range of 0.04 - 2.5 MHz.

It is further found that the walls of the fluidic cell not adjacent to the ultrasonic transducer are preferably transparent to the ultrasonic radiation generated by the transducer. This feature adds in avoiding adverse reflections at the walls which may mitigate generation of required gradients in the fluidic cell. In addition, use of a material which is substantially transparent for ultrasonic radiation for wall distant from the transducer avoids generation of a disadvantageous standing wave in the fluidic cell.

Accordingly, phase separation between liquid and gas in the two-phase fluid may be achieved. As a result, the liquid and the gas may be caused to migrate separately towards their specific dwelling regions. By providing the dwelling regions with corresponding discharge conduits the gas component and the liquid component may be conducted away from the fluidic cell separately.

Accordingly, the efficiency of the microfluidic device according to the invention does not depend on the impurities or sediment present in the two-phase liquid.

Surprisingly, it is further found that such fluidic cell may be used in immersion lithography. Immersion lithography is a well-known technique, wherein a wafer to be processed is positioned on a wafer stage immersed in a suitable immersion liquid. Usually, an outer optical element of a projection system is also immersed in the immersion liquid. The immersion liquid is usually supplied through suitable conduits or nozzles from a storage container.

In the immersion lithographic apparatus vibrations in immersion cap due to discharging the immersion fluid comprising water and air may cause substantial (i.e about 20%) overlay error during lithography. In such two-phased fluid slug flow patterns may occur causing vibrations in the recovery conduits, especially entry/exit areas of the conduits and at its bends.

By providing an immersion lithography with a microfluidic device apparatus according to the invention gas and water may be separated prior to their discharge thereby substantially reducing detrimental vibrations.

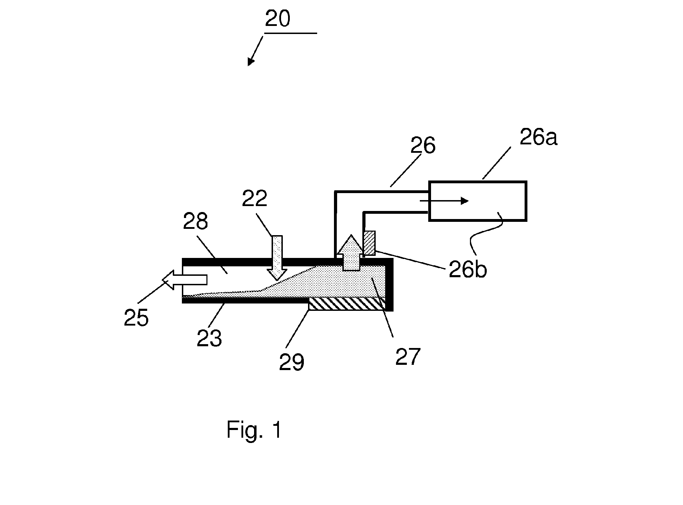

It is further noted that the invention may be practiced in fluidic cells having different configurations, ranging from a fluid conduit to a container. Typically, a dimension of a suitable fluidic cell in a direction of separation may be as large as 10 cm, preferably as large as 2 cm. Preferably, the fluidic cell is selected to have a relatively low height in relation to its width. This embodiment is further discussed with reference to Figure 1.

It is further noted that the term 'fluid' used in the application may relate to any combination of gases and liquids.

It will be appreciated that the phase separation effect may be achieved when the fluid experiences a power/and or a phase gradient in the generated ultrasonic wave. Such gradients may be achieved by a plurality of ways.

First, it is possible to arrange a single ultrasonic transducer at one side (extremity) of the fluidic cell, so that the fluid dwelling at the corresponding side experiences a much higher a power and/or phase of the ultrasonic radiation that the fluid dwelling at a distant location across the fluidic cell.

As a result, the fluid dwelling in the vicinity of the ultrasonic transducer will be attracted towards a region having high ultrasonic pressure due to high power and/or phase of the ultrasonic beam. It is found that in relatively small chambers (up to 10 cm in one direction) the forces causing the liquid to migrate with the ultrasonic pressure gradient are much greater than the surface forces, or other forces, like forces caused by internal pressure difference or gravity.

Accordingly, the liquid component will be accumulated in the region of high power and/or phase of the ultrasonic radiation. Accordingly, gas will tend to be accumulated in an opposite location. By providing respective discharge conduits in vicinities of such regions, targeted liquid- and gas discharge may be facilitated. It will be appreciated that active pumping may be required.

Alternatively, it is possible that the ultrasonic transducer comprises an array of individually controlled transducers for generating the ultrasonic wave having a power and/or a phase gradient.

It will be appreciated that a substantially horizontal gradient is desirable in order to cause liquid migration along substantially the same gravity field.

Still alternatively, it is possible that the ultrasonic transducer comprises two ultrasonic transducers, each generating an ultrasonic wave having different amplitudes. The high-amplitude (i.e. high power) ultrasonic field attracts the liquid component, while the ultrasonic field of the low-power transducer facilitates fluid transport by preventing droplet sticking.

Preferably, the power of the low-power ultrasonic transducer differs by about 90% from the amplitude of the high-power ultrasonic transducer for generating a net inhomogeneous ultrasonic filed irradiating the fluid having a suitable gradient for causing migration of the liquid component.

Still alternatively, it is possible that a layer of absorbing material is provided between the fluidic cell and the ultrasonic transducer, said layer having a variable thickness.

It will be appreciated that, preferably, the absorbing layer represents a three-dimensional wedge, wherein a thick region corresponds to an area of low power and a thin region corresponding to an area of high power.

It will be appreciated that the microfluidic device may comprise a stationary fluid or a flowing fluid.

It is found that microfluidic device according to the invention is also suitable for homogenising a wavy surface of a flowing liquid. It will be appreciated that such liquid may have one phase or may comprise a gaseous phase.

A method of phase separation in a two-phase fluid comprising a gas component and a liquid component comprises the steps of:
- providing an ultrasonic transducer in a direct vicinity of a wall of the fluidic cell for generating an ultrasonic wave in an inner volume of the fluidic cell, wherein the ultrasonic transducer is set to operate with a frequency in the range of 0.04 - 10 MHz and generating an ultrasonic wave having a power gradient and/or a phase gradient.

Preferably, at least the walls of the fluidic cell not supporting the ultrasonic transmitter are substantially transparent to the ultrasonic radiation generated by the transmitter.

According to a still further aspect of the invention a conduit is provided comprising a microfluidic device as is set forth in the foregoing.

These and other aspects of the invention will be further discussed with reference to drawings which are provided for illustrative purposes only and may not be used for limiting the scope of the appended claims. In the Figures like reference numerals refer to the like elements.

### BRIEF DESCRIPTION OF THE DRAWINGS

Figure 1 present a schematic view of an embodiment of a fluidic device according to the invention.
Figure 2 presents a schematic view of a further embodiment of a fluidic device according to the invention.
Figure 3 presents a schematic view of a still further embodiment of a fluidic device according to the invention.
Figure 4 presents a schematic view of a suitable fluid conduit for practicing the invention.
Figure 5 presents a schematic view of a still further embodiment of a fluidic device according to the invention.

### DETAILED DESCRIPTION OF THE DRAWINGS

Figure 1 present a schematic view of an embodiment of a fluidic device according to the invention. According to an aspect of the invention a fluidic device 20 is provided comprising a fluidic cell having a fluid inflow area 22 for providing a fluid having a gas component and a liquid component in the inner volume of the fluidic cell 20. In order to enable phase separation an ultrasonic transducer 29 is provided. Typically, the fluidic cell represents an elongated structure. Accordingly, it is convenient to provide the ultrasonic transducer at a pre-selected extremity of the fluidic cell, for example in a direct vicinity of the region 27 wherein the liquid phase is conceived to be accumulated.

The ultrasonic transducer is preferably mounted directly on a wall 23 of the fluidic cell. Preferably the walls, except for the wall 23 are provided from a material, which is substantially transparent to the ultrasonic radiation, which, in accordance with the invention may have a frequency in the range of 0.04 - 10 MHz. Suitable examples of such materials are polymethylpentene (TPX) or polyether imide (PEI). Alternatively or additionally, a thickness of the wall may be less than a wavelength of the ultrasonic radiation. Preferably the thickness is selected in the range of 0.2 - 0.9 λ.

In accordance with the inventive insight, the ultrasonic transducer 29 is arranged to generate ultrasonic waves having a power and/or a phase gradient along the fluidic cell. It will be appreciated that a direction of the gradient depends on a position of a liquid discharge conduit 26 with respect to a position of the transducer 29 on the wall 23.

It is found that a liquid, subjected to a power and/or a phase gradient will be attracted to a region of a high power or phase of the ultrasonic field, which correspond to a region of high ultrasonic pressure. Accordingly, liquid 27 will be collected in a right-hand side of Figure 1, whereas gas 28 will be collected at a left-hand side.

In order to discharge gas and liquid from the fluidic cell corresponding conduits 25, 26 are provided. In an embodiment of the invention at least the liquid conduit is provided with a pump 26a, which may be activated by a sensor 26b arranged in or near the mouth of the conduit 26 for signalling that the liquid component is being accumulated there.

Suitable examples of such sensor relate to a conductivity sensor, a refraction sensor or a further ultrasonic sensor. It will be appreciated that such sensors are known per se in the art. When the sensor 26b has determined a presence of the liquid component near the conduit 26 a signal may be provided to the pump for pumping the liquid component away from the fluidic cell.

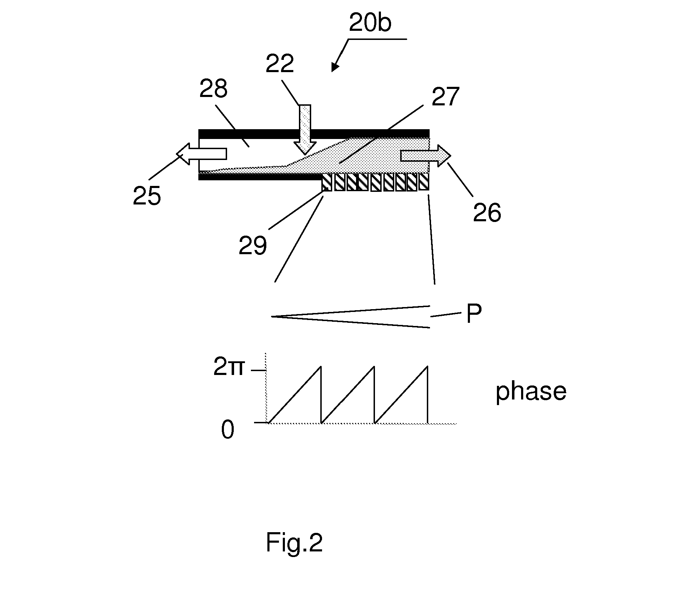

Figure 2 presents a schematic view of a further embodiment of a fluidic device according to the invention. The fluidic cell 20b may be similar to the embodiment 20 discussed with reference to Figure 1, except for the transducer array 29 which is composed of individual transducer elements.

In this embodiment the individual transducer elements may be controlled individually to provide an ultrasonic field having a power gradient P or a phase gradient, as is indicated below. It will be appreciated that it is possible to use either a power gradient or a phase gradient for enabling phase separation, or, alternatively, it is possible to use both gradients at the same time for improving efficiency of phase separation.

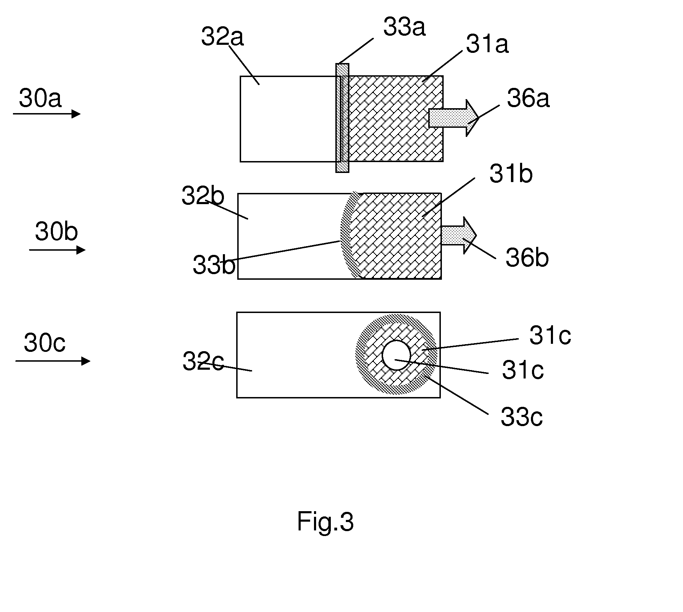

Figure 3 presents a schematic view of a still further embodiment of a fluidic device according to the invention. In this embodiment three advantageous options regarding electrode arrangements of the transducer elements are presented.

In view 30a a top view of a fluidic cell discussed with reference to Figure 1 is shown. Region 31a is depicted as being covered by a transducer element adapted to generate an inhomogeneous ultrasonic field according to the invention. It is expected that the liquid component will be accumulated in the region 31a. In region 32a the gas component will be accumulated.

In order to enforce migration of the liquid component towards the region wherein a discharge conduit 36a may be provided, electric contacts 33a are provided at a distal portion of the transducer 31a with respect to the conduit 36a. In addition a layer of the transducer may have an elevated resistance. As a result, due to the fact that the ultrasonic transducer operated in an AC mode, there will be some delay before the charge is conducted from a surface adjacent to the contacts 33a to a surface near the conduit 36a. This will manifest itself as an additional force urging the liquid component from the boundary 33a towards a region near the conduit 36a thereby improving phase separation.

In view 30b a modified embodiment is shown, wherein the electrode surface 33b is bent. Such embodiment has an advantage that the waves of the charge transport across the transducer element 31b will arrive substantially at the same time at a center point C, which may be positioned in or near the mouth of the discharge conduit 36b. As a result substantially coherent liquid accumulation at the center point C may be achieved, while gas will be accumulated in the region 32b.

In view 30c a still further embodiment is shown, wherein the transducer element 31c is arranged around the mouth of the discharge conduit 36c, which is transversely arranged with respect to a plane of the figure. The electrical contacts 33c is preferably arranged along a suitable circumference, preferably concentric with respect to the discharge conduit 36c. This embodiment may have the highest phase separation efficiency, due to the fact that the liquid will be caused to migrate from a surface adjacent the contacts 33c towards a center of the structure near the mouth of the discharge conduit 36c, wherein the gas component will be left outside the region covered by the transducers 33c.

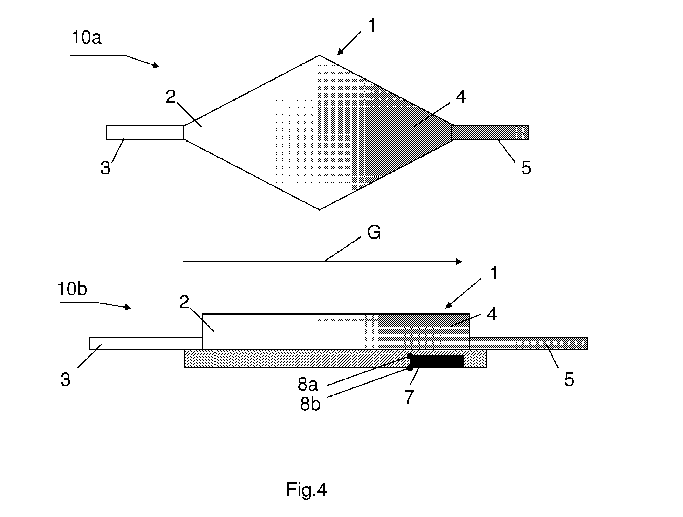

Figure 4 presents a schematic view of a suitable fluid conduit for practicing the invention. In view 10a a schematic representation of a top view of a fluidic cell 1 is presented. For clarity reasons a fluid supply conduit is not shown. It will be appreciated that the fluid supply conduit may be arranged to supply fluid from an upper surface of the fluidic cell 1.

In accordance with an aspect of the invention an ultrasonic transducer (shown in view 10b) is provided beneath the fluidic cell 1 for generating a flied of ultrasonic radiation long the fluidic cell 1 so that there is a substantial difference between amplitude of the ultrasonic field between two regions of the fluidic cell (a gradient is schematically given by G). For example, the ultrasonic transducer may be arranged to generate a first region with high amplitude of the ultrasonic beam at the region 4 and a second region with low amplitude of the ultrasonic beam at the region 2. Accordingly, for a two-phased fluid provided in the fluidic cell 1, a liquid component will migrate towards the region 4 (high amplitude) and a gas component will migrate towards the region 2 (low amplitude).

In order to facilitate a dedicated discharge of the gas and liquid components from the fluidic cell 1, it may be provided with a gas conduit 3 and a liquid conduit 5 arranged at places corresponding to the respective accommodation regions of these phases.

In view 10b a cross-section of the fluidic cell 1 is schematically depicted. According to an aspect of the invention the fluidic cell 1 is adapted to cooperate with an ultrasonic transducer 7 operable for inducing an ultrasonic field across the inner volume of the fluidic cell 1 and having a substantially horizontal gradient in amplitude of the thus generated ultrasonic field. Preferably a difference between the region 2 of the low gradient field and the region 4 of the high gradient field is about 90%. In accordance with the rationale set forth with reference to Figure 3, electrical contacts 8a and 8b are preferably provided at a distal region of the transducer element 7 with respect to the position of the liquid discharge conduit 5.

It will be appreciated that different implementations of the ultrasonic transducer capable of generating an ultrasonic field with an amplitude gradient is possible. First, it is possible to arrange a single ultrasonic transducer 7 at one side of the fluidic cell, so that the immersion fluid dwelling at the corresponding side experiences a much higher amplitude of the ultrasonic radiation that the immersion fluid dwelling at a distant location across the fluidic cell. Alternatively, it is possible that the ultrasonic transducer comprises an array of individually controlled transducers for generating the ultrasonic wave having an amplitude gradient. Still alternatively, it is possible that the ultrasonic transducer comprises two ultrasonic transducers, each generating an ultrasonic wave having different amplitudes. Still alternatively, it is possible that a layer of absorbing material is provided between the fluidic cell and the ultrasonic transducer, said layer having a variable thickness.

It will be appreciated that the fluidic cell 1 may form a part of an immersion lithography apparatus. Alternatively, the fluidic cell 1 may form part of any other suitable device arranged for implementing phase separation between a liquid and a gas. For example, the fluidic cell 1 may be incorporated in a suitable conduit conceived to conduct a flow of a multiphase fluid. For example, such fluidic cell may be used to separate gas from oil.

It is found that with the invention particularly good phase separation may be achieved for relatively not deep channels and for microscopic layer of liquid arranged in an open container. It is further found that efficiency of phase separation is substantially constant irrespective for liquid/gas ratio. Also, it is observed that a substantially vertical phase separation may be achieved when a substantially continuous phase is present, for example liquid droplets in gas or gas bubbles in a liquid. Preferably, a suitable fluid conceived to be selected for phase separation comprises not more than 1 % of disperse phase. Finally, it is observed that efficiency of phase separation is substantially not dependent on dimensions of the fluidic cell with respect to the wavelength of the ultrasonic beam. This feature makes the invention particular suitable to be used for phase separation in oil pipes or the like.

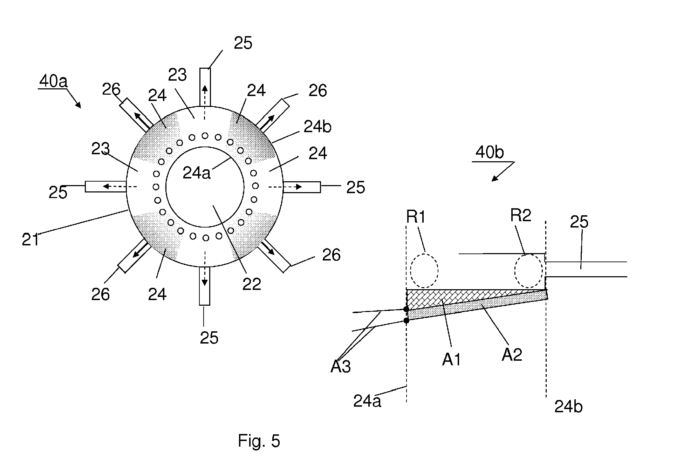

Figure 5 presents a schematic view of the device according to the invention. View 40a depicts schematically a top view of a cross-section of a fluidic cell 21 comprising a two-phase fluid. The fluid may be supplied into the inner volume of the fluidic cell 21 via a fluid supply conduit 22.

In this embodiment an array of ultrasonic transducers is provided (see item 29 in view 40b), wherein individual array elements are controlled individually by a control unit (not shown). Accordingly, desirable patterns of high amplitude and low amplitude regions may be provided. It will be appreciated that although the present embodiment depicts a circular fluidic cell 21 having interleaved regions 23, 24 of low amplitude and high amplitude of the ultrasonic field, respectively, other arrangements are possible. For example, the fluidic cell may be an elongated body wherein the ultrasonic field may have either an interleaved structure of regions of low amplitude and high amplitude, or it may have linearly increasing amplitude of the ultrasonic field.

In accordance with the invention the ultrasonic transducers are operable as phase separators, wherein regions with low amplitude 23 accumulate gas and wherein regions with high amplitude 24 accumulate liquid. For facilitating separated discharge of gas and liquid outside the fluidic cell 21, gas discharge conduits 25 are provided and liquid discharge conduits 26 are provided.

View 40b depicts schematically a cross-section of a portion of the fluidic cell 21 shown in view 40a between an inner surface 24a and an outer surface 24b. It is seen, that the ultrasonic transducer A2 arranged directly beneath a bottom surface of the fluidic cell portion 24, may be used for causing the liquid to be accumulated in a region wherein the discharge conduit 25 is present.

In accordance with the present embodiment, the ultrasonic transducer A2, provided with electrical contacts A3 is arranged to cooperated with a wedge-like absorber A1, which is designed with a profile necessary for causing a low power (i.e. amplitude) of the ultrasonic field in region R1 and a high power (i.e. amplitude) of the ultrasonic field in the region R2 near the liquid discharge conduit 25. It will be appreciated that the person skilled in the art will readily understand which classes of materials are suitable for implementing the absorber A1.

While specific embodiments have been described above, it will be appreciated that the invention may be practiced otherwise than as described. Moreover, specific items discussed with reference to any of the Figures may freely be inter-changed supplementing each other in any particular way. The descriptions above are intended to be illustrative, not limiting. Thus, it will be apparent to one skilled in the art that modifications may be made to the invention as described in the foregoing without departing from the scope of the claims set out below.

## Claims

1. A microfluidic device comprising a fluidic cell for accommodating a fluid comprising a gas component and a liquid component in use, the device comprising:
- an ultrasonic transducer arranged in a direct vicinity of a wall of the fluidic cell for generating an ultrasonic wave in an inner volume of the fluidic cell, wherein the ultrasonic transducer is adapted to operate with a frequency in the range of 0.04 - 10 MHz and to generate an ultrasonic field having a power gradient and/or a phase gradient.

2. A device according to claim 1, wherein the ultrasonic transducer is arranged at one side of the fluidic cell for subjecting a portion of the fluid dwelling in a vicinity of said side to the ultrasonic field having said power and/or a phase gradient.

3. A device according to claim 1, wherein further walls of the fluid cell are substantially transparent to the ultrasonic radiation.

4. A device according to claim 1, wherein the ultrasonic transducer comprises an array of individually controlled transducers for generating the ultrasonic wave having the power and/or the phase gradient.

5. A device according to claim 1, 2 or 3, wherein the ultrasonic transducer comprises two ultrasonic transducers, each generating an ultrasonic wave having different amplitudes.

6. A device according to claim 1, 2 or 3, wherein a layer of absorbing material is provided between the fluidic cell and the ultrasonic transducer, said layer having a variable thickness.

7. A device according to claim 1, wherein the fluidic cell is arranged to accommodate a flow of fluid, the ultrasonic device being arranged to generate said gradient along a flow direction.

8. A device according to claim 3, wherein the further walls are made of polymethylpentene (TPX) or polyether imide (PEI).

9. A device according to claim 3 or 8, wherein a thickness the further walls is smaller than a wavelength of the ultrasonic radiation generated by the transducer.

10. A device according to any one of the preceding claims, further comprising a sensor arranged in a region of accumulation of the liquid phase and a pump cooperating with the liquid conduit, the sensor being arranged to trigger the pump upon detection of accumulated liquid component.

11. A device according to claim 10, wherein the sensor comprises a conductivity sensor, a further ultrasonic transducer or a refraction index sensor.

12. A device according to any one of the preceding claims, wherein the ultrasonic transducer contains at least two electrical contacts, wherein the contacts are provided in a region corresponding to a low power and/or low phase region wherein at least one layer of the transducer is resistive.

13. A method of enabling a phase separation between a liquid component and a gas component in a multiphase fluid arranged in a fluidic cell, the method comprising the steps of:
- providing an ultrasonic transducer in a direct vicinity of a wall of the fluidic cell for generating an ultrasonic wave in an inner volume of the fluidic cell, wherein the ultrasonic transducer is set to operate with a frequency in the range of 0.04 - 10 MHz and to generate an ultrasonic field having a power gradient and/or a phase gradient, further walls being substantially transparent to the ultrasonic radiation.

14. A fluid conduit comprising a microfluidic device according to any one of the preceding claims 1 - 12.
